# EUROPEAN PATENT APPLICATION

(11) **EP 3 793 153 A1**
(43) Date of publication of application: **17.03.2021**
(21) Application number: 18918252.0
(22) Date of filing: 11.05.2018
(51) Int. Cl.: H04L 27/26

(54) **USER TERMINAL AND WIRELESS BASE STATION**

(71) Applicant: NTT DOCOMO, INC., Chiyoda-ku Tokyo 100-6150 (JP)
(72) Inventor: MURAYAMA, Daisuke, Chiyoda-ku, Tokyo 100-6150 (JP); HARADA, Hiroki, Chiyoda-ku Tokyo 100-6150 (JP); TAKEDA, Kazuaki, Chiyoda-ku Tokyo 100-6150 (JP); NAGATA, Satoshi, Chiyoda-ku Tokyo 100-6150 (JP)
(74) Representative: Hoffmann Eitle
(86) International application number: PCT/JP2018/018344
(87) International publication number: WO 2019/215918

(57) **Abstract**

A user terminal includes a transmitting section that transmits a random access preamble in a carrier for which listening before transmission is employed, and a control section that controls transmission of the random access preamble, based on configuration information different from certain configuration information to be used for at least one of random access in a case of not supporting communication in the carrier and random access in a carrier for which listening before transmission is not employed.

## Description

### Technical Field

The present invention relates to a user terminal and a radio base station in next-generation mobile communication systems.

### Background Art

In the UMTS (Universal Mobile Telecommunications System) network, the specifications of Long Term Evolution (LTE) have been drafted for the purpose of further increasing high speed data rates, providing lower latency and so on (see Non-Patent Literature 1). In addition, for the purpose of achieving further broadbandization and increased speed beyond LTE (also referred to as "LTE Rel. 8" or "LTE Rel. 9"), LTE-A (also referred to as "LTE-Advanced," "LTE Rel. 10," "LTE Rel. 11," or "LTE Rel. 12") is standardized, and successor systems of LTE (referred to as, for example, "FRA (Future Radio Access)," "5G (5th generation mobile communication system)," "5G+ (plus)," "NR (New Radio)," "NX (New radio access)," "New RAT (Radio Access Technology)," "FX (Future generation radio access)," "LTE Rel. 13," "LTE Rel. 14," "LTE Rel. 15" (or later versions), and so on) are also under study.

In LTE Rel. 10/11, carrier aggregation (CA) for aggregating a plurality of component carriers (CCs) is adopted for the purpose of achieving broadbandization. Each CC is constituted by using a system band of LTE Rel. 8 as one unit. In CA, a plurality of CCs of one radio base station (eNB (eNode B)) are configured for a user terminal (UE (User Equipment)).

Meanwhile, in LTE Rel. 12, dual connectivity (DC), in which a plurality of cell groups (CGs) of different radio base stations are configured for a UE, is also adopted. Each cell group is constituted of at least one cell (CC). Since a plurality of CCs of different radio base stations are aggregated in DC, DC is also referred to as "inter-base station CA (Inter-eNB CA)," and the like.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall description; Stage 2"

### Summary of Invention

### Technical Problem

It is expected for future radio communication systems (for example, 5G and NR) to provide various radio communication services satisfying respective different requirements (for example, ultra-high speed, large capacity, ultra-low latency, and the like).

For LTE Rel. 14, eLAA (enhanced License-Assisted Access) that supports UL transmission in an unlicensed carrier is studied to satisfy the above-described requirements for various types of communication. For example, it is conceivable to transmit uplink control information (UCI) on an unlicensed carrier.

Since an unlicensed carrier is a band shared by a plurality of providers and the like, LBT (Listen Before Talk) needs to be successfully established to perform transmission of a signal on such an unlicensed carrier. LBT is a technique for performing listening (sensing) before transmission of a signal and controlling the transmission, based on the result of the listening.

Some countries, areas, and the like have regulations for the use of such a carrier requiring listening before transmission, by taking LBT and the like into account. However, it is conceivable that communication cannot be performed when a method of transmitting a random access preamble does not satisfy such requirements.

The present invention has been made in view of the above described respects, and an object of the present invention is to provide a user terminal and a radio base station that can appropriately transmit a random access preamble even in a case of a carrier requiring listening before transmission. Solution to Problem

A user terminal according to an aspect of the present invention includes a transmitting section that transmits a random access preamble in a carrier for which listening before transmission is employed, and a control section that controls transmission of the random access preamble, based on configuration information different from certain configuration information to be used for at least one of random access in a case of not supporting communication in the carrier and random access in a carrier for which listening before transmission is not employed. Advantageous Effects of Invention

According to the present invention, it is possible to appropriately transmit a random access preamble even in a case of a carrier requiring listening before transmission.

### Brief Description of Drawings

FIG. 1 is a diagram to show an example of a random access procedure;
FIG. 2 is a diagram to show an example of a PRACH format for long sequence;
FIG. 3 is a diagram to show an example of a PRACH format for short sequence;
FIG. 4 is a diagram to show an example of a PRACH basic design;
FIG. 5 is a diagram to show an example of table 1 according to a first aspect;
FIG. 6 is a diagram to show an example of table 2 according to the first aspect;
FIG. 7 is a diagram to show an example of table 3 according to the first aspect;
FIG. 8 is a diagram to show an example of a schematic structure of a radio communication system according to one embodiment of the present invention;
FIG. 9 is a diagram to show an example of an overall structure of a radio base station according to one embodiment of the present invention;
FIG. 10 is a diagram to show an example of a functional structure of the radio base station according to one embodiment of the present invention;
FIG. 11 is a diagram to show an example of an overall structure of a user terminal according to one embodiment of the present invention;
FIG. 12 is a diagram to show an example of a functional structure of the user terminal according to one embodiment of the present invention; and
FIG. 13 is a diagram to show an example of a hardware structure of the radio base station and the user terminal according to one embodiment of the present invention.

### Description of Embodiments

It is studied for 5G/NR to use not only a licensed carrier (carrier in a licensed band) but also an unlicensed carrier (carrier in an unlicensed band), for communication. A licensed carrier is a carrier of frequencies specifically allocated to one provider. An unlicensed carrier is a carrier of frequencies shared by a plurality of providers, RATs or the like.

Although a licensed carrier has no particular restriction on timing for transmitting a signal, LBT (Listen Before Talk) needs to be successfully performed to transmit a signal on such an unlicensed carrier. LBT is a technique for performing listening (sensing) before transmission of a signal and controlling the transmission, based on the result of the listening.

It is considered that, for systems that operate NR in an unlicensed carrier (for example, a LAA system), an interference control function is needed to coexist with NR, LTE, wireless LAN (Local Area Network), or other systems of other providers. Note that such a system that operates NR in an unlicensed carrier may be referred to as an "LAA," an "NR-U," and the like irrespective of operation mode being DC, CA, or DC or SA.

A transmission point (for example, a radio base station (gNB or eNB), a user terminal (UE), or the like) that performs communication by using an unlicensed carrier (which may be referred to as an "unlicensed cell," an "unlicensed CC," or the like) is normally prohibited from performing, when detecting another entity (e.g., another UE) performing communication on the unlicensed carrier, transmission on the carrier.

For this reason, the transmission point carries out listening (LBT) at timing a certain period before transmission timing. Specifically, the transmission point that carries out LBT searches the entire target carrier band (for example, one component carrier (CC)) at timing a certain period before transmission timing (for example, in an immediately previous subframe) to check whether any other apparatus (for example, radio base stations, UEs, Wi-Fi apparatus, and the like) is performing communication in the carrier band.

Note that, in this specification, listening indicates an operation in which a transmission point (for example, a radio base station, a user terminal, or the like) detects/measures whether a signal having a level exceeding a certain level (for example, a certain power) is transmitted from another transmission point and the like, before transmitting a signal. Such listening performed by a radio base station and/or a user terminal may be referred to as "LBT," "CCA (Clear Channel Assessment)," "carrier sense," and the like.

For example, LBT performed before downlink transmission by a radio base station may be referred to as "DL LBT," and, for example, LBT performed before uplink transmission by UE may be referred to as "UL LBT." The UE may be notified of information related to a carrier for which UL LBT is to be carried out, and make a determination of the carrier, based on the information, to carry out UL LBT.

When it is confirmed that no other apparatus is performing communication, the transmission point performs transmission by using the carrier. For example, when a received power measured in LBT (a received signal power during an LBT period) is a certain threshold or lower, the transmission point determines that the channel is in a free state (LBT free) and performs transmission. The "channel is in a free state" indicates, in other words, that the channel is not fully occupied by a particular system, and is also referred to as the "channel is idling," the "channel is clear," the "channel is free," and the like.

In contrast, when the transmission point detects that even a part of the target carrier band is used by another apparatus, the transmission point cancels a transmission process of the transmission point itself. For example, when the transmission point detects that a received power of a signal from another apparatus related to the band exceeds a certain threshold, the transmission point determines that the channel is in a busy state (LBT busy) and does not perform transmission. In a case of LBT busy, the channel becomes first available after LBT is performed again and the channel is confirmed to be in a free state. Note that a method of determining whether a channel is in a free state or busy state by LBT is not limited to this.

The transmission point can transmit a certain signal (for example, a channel reservation signal) according to an LBT result. Here, an LBT result means information (for example, LBT free, LBT busy) related to a channel availability state obtained through LBT in a carrier for which LBT is configured.

When the transmission point starts transmission in a case that the LBT result indicates a free state (LBT free), the transmission point can perform transmission while omitting LBT for a certain period (for example, 10 to 13 ms). Such transmission is also referred to as "burst transmission," "burst," "transmission burst," and the like.

As described above, in a LAA system, adoption of interference control in the same frequency based on an LBT mechanism into a transmission point can prevent interference between LAA and Wi-Fi, interference between LAA systems, and the like. Even in a case that control of transmission points is independently performed by each operator that operates a LAA system, it is possible, through LBT, to reduce interference without grasping details of control by each operator.

In some cases, even for a cell of an unlicensed carrier, a random access (RA) procedure for uplink transmission timing adjustment needs to be performed. For example, when the distance between a radio base station forming a secondary cell (SCell) of an unlicensed carrier and a UE is different from the distance between the radio base station forming a primary cell (PCell) of a licensed carrier and a UE, the transmission timing for the SCell is assumed to be different from transmission timing for the PCell. Note that a SCell that operates in an unlicensed carrier may be referred to as a "LAA SCell," for example.

Note that, since whether transmission is possible or not varies based on LBT, it is conceivable that a radio frame structures used in a LAA SCell is different from existing radio resource structures. While a radio frame used in FDD (Frequency Division Duplex) is referred to as "frame structure type 1 (FS1)" and a radio frame used in TDD (Time Division Duplex) is referred to as "frame structure type 2 (FS2)," a radio frame structure used in a LAA SCell is also referred to as frame structure type 3 (FS3) .

It is studied to perform control based on non-contention-based random access (Non-CBRA) in a LAA SCell. Transmission control of an existing random access channel (PRACH (Physical Random Access Channel)) will be described below.

In existing LTE systems (Rel. 12 or earlier versions), a physical random access channel (PRACH) is transmitted in the uplink to perform random access at initial connection, synchronization establishment, communication restart, and the like. Random access can be divided into two types, i.e., contention-based random access (CBRA) and non-contention-based random access (Non-CBRA). Note that non-contention-based RA may be referred to as contention-free random access (CFRA).

In contention-based random access, a user terminal transmits, on a PRACH, a preamble randomly selected from a plurality of random access preambles prepared in a cell (contention preamble). In this case, when user terminals use the same random access preamble, contention may occur.

In non-contention-based random access, a user terminal transmits, on a PRACH, a UE-specific random access preamble assigned in advance by a network (dedicated preamble). In this case, since different random access preambles are assigned to user terminals, no contention occurs.

Contention-based random access is performed at initial connection, start or restart of uplink communication, and the like. Non-contention-based random access is performed at handover, start or restart of downlink communication, and the like.

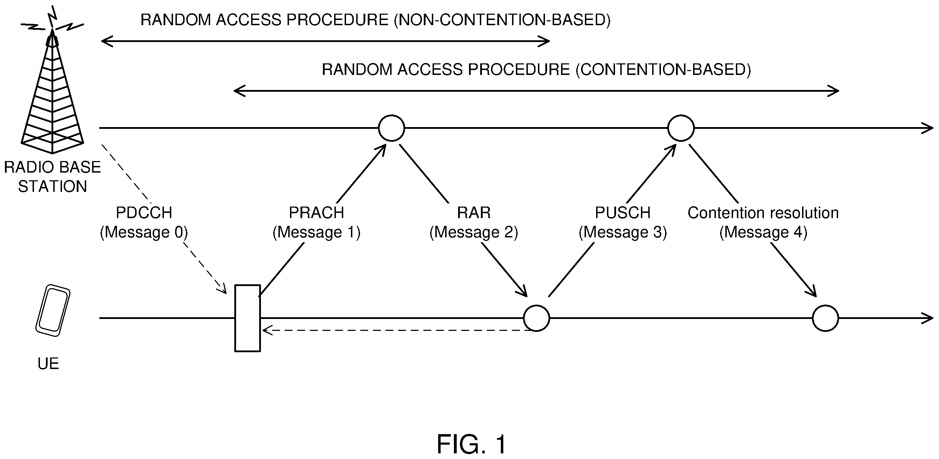

FIG. 1 shows an overview of random access. Contention-based random access is constituted of step 1 to step 4, while non-contention-based random access is constituted of step 0 to step 2.

In the case of contention-based random access, a user terminal UE first transmits a random access preamble (PRACH) by using a PRACH resource configured for a corresponding cell (message (Msg) 1). Upon detection of a random access preamble, a radio base station transmits a random access response (RAR) as a response to the random access preamble (message 2). The user terminal UE attempts to receive message 2 in a certain section after the transmission of the random access preamble. When the reception of message 2 is failed, the user terminal UE transmits (retransmits) message 1 again on the PRACH with an increased transmission power. Note that increasing a transmission power at the time of retransmission of a signal is also referred to as "power ramping."

The user terminal UE that has received the random access response transmits a data signal on a physical uplink shared channel (PUSCH) indicated by an uplink grant included in the random access response (message 3). The radio base station that has received message 3 transmits a contention resolution message to the user terminal UE (message 4). The user terminal UE ensures synchronization by using messages 1 to 4 and completes, when identifying the radio base station, the contention-based random access process to establish a connection.

In a case of non-contention-based random access, a radio base station first transmits a physical downlink control channel (PDCCH) that indicates transmission of a PRACH, to a user terminal UE (message 0). The user terminal UE transmits a random access preamble (PRACH) at timing indicated by the PDCCH (message 1). Upon detection of the random access preamble, the radio base station transmits a random access response (RAR) (message 2), which is response information to the random access preamble. Upon receipt of message 2, the user terminal completes the non-contention-based random access process. Note that, as in contention-based random access, when the reception of message 2 is failed, the user terminal UE transmits message 1 again on the PRACH with an increased transmission power.

Note that transmission of a random access preamble (message 1) using a PRACH is also referred to as "transmission of a PRACH," and reception of a random access response (message 2) using a PRACH is also referred to as "reception of a PRACH."

For NR, a plurality of PRACH formats (PRACH preamble formats) are studied.

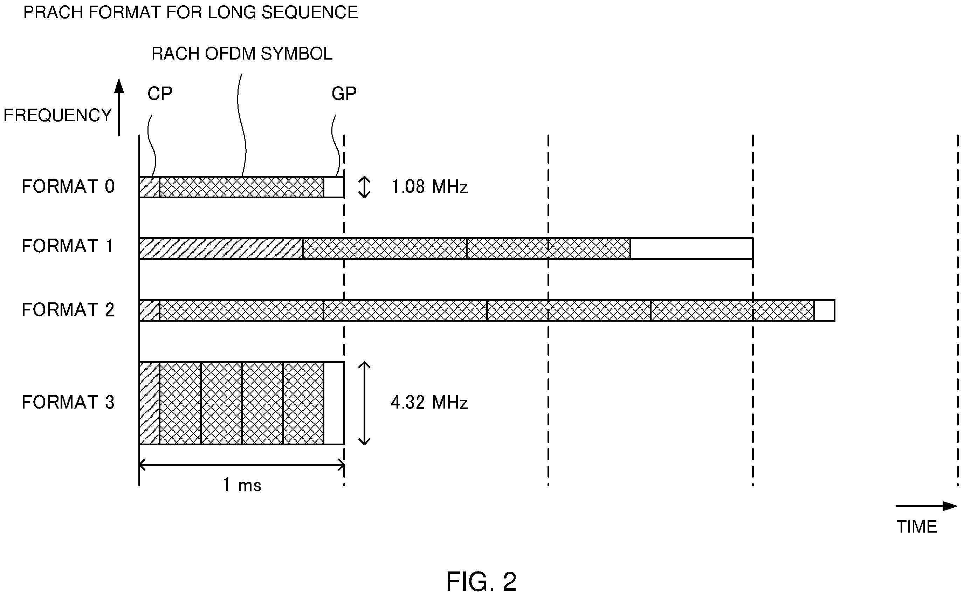

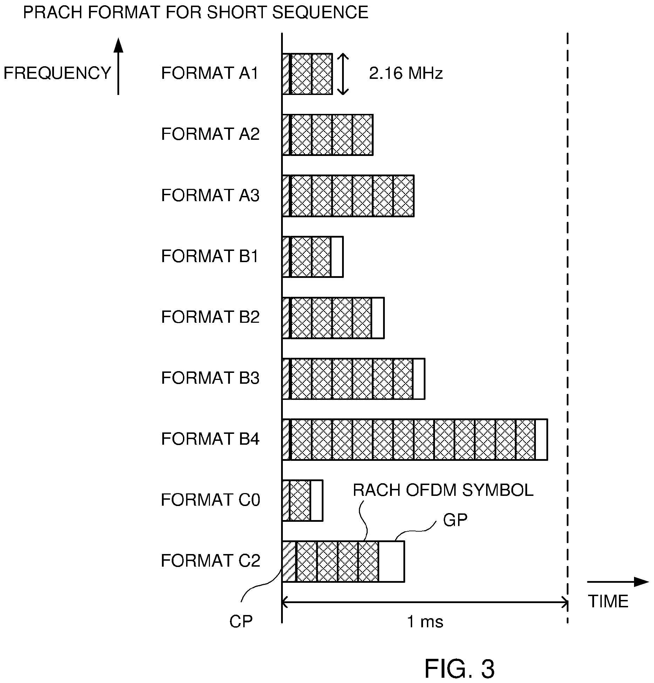

A RA (Random Access) preamble using any of the PRACH formats includes a RACH OFDM symbol. Further, a RA preamble may include at least one of a cyclic prefix (CP) and a guard period (GP). For example, each of PRACH formats 0 to 3 shown in FIG. 2 uses a preamble sequence of a long sequence for a RACH OFDM symbol. Each of PRACH formats A1 to A3, B1 to B4, C0, and C2 shown in FIG. 3 uses a preamble sequence of a short sequence for a RACH OFDM symbol.

The frequencies of an unlicensed carrier may be within the frequency range of either FR (Frequency Range) 1 or FR2. FR1 may be a frequency range lower than a certain frequency, and FR2 may be a frequency range higher than a certain frequency. In NR-U, the certain frequency may be 7 GHz. For example, FR1 may be in a band of 5 GHz or a band of 6 GHz. FR2 may be a band of 60 GHz.

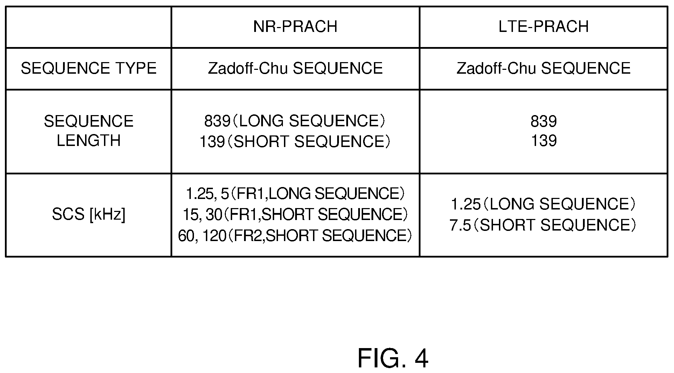

As shown in FIG. 4, a preamble sequence may be a Zadoff-Chu (ZC) sequence. The preamble sequence length may be either 839 (long sequence) or 139. The preamble sequence may be mapped to a frequency resource (for example, a subcarrier) allocated to a PRACH.

A RA preamble may use one of a plurality of numerologies. Subcarrier spacing (SCS) for a long sequence of FR1 in NR may be either 1.25 kHz or 5 kHz. SCS for a short sequence of FR1 in NR may be either 15 kHz or 30 kHz. SCS for a short sequence of FR2 in NR may be either 60 kHz or 120 kHz. SCS for a long sequence in LTE may be 1.25 kHz. SCS for a short sequence in LTE may be 7.5 kHz.

To use an unlicensed carrier, it is necessary to satisfy regulations for transmission waveform.

For example, according to regulations by European Telecommunications Standards Institute (ETSI), an occupied channel bandwidth (OCB) having 99% of a signal power for the use of 5 GHz, which is one of unlicensed carriers, must be a bandwidth of 80% or more of a system bandwidth. Moreover, restrictions related to a maximum transmit power spectral density (PSD) per certain bandwidth (1 MHz) are specified.

However, for some numerologies for a PRACH in NR, a PRACH does not satisfy the regulations of OCB.

Depending on an availability state of a frequency band of an unlicensed carrier, NR-U has a possibility of using a band wider than 20 MHz. In this case, the current numerologies for a PRACH in NR cannot satisfy the regulations of OCB.

In view of these, the inventors of the present invention studied PRACH structures that satisfy the regulations of OCB and reached the present invention.

Embodiments according to the present invention will be described in detail with reference to the drawings as follows. The radio communication method according to each embodiment may be employed independently or may be employed in combination. Note that, although a description will be given by taking an unlicensed carrier as an example below, the present invention may be applied to a licensed carrier. More generally, the present invention may be applied to a carrier requiring listening before transmission (carrier for which listening is configured), or may be applied to a carrier not requiring listening before transmission (carrier for which listening is not configured).

A radio base station may notify a UE of configuration information for indicating a PRACH structure, such as a PRACH format or a numerology (for example, SCS). The information may be notified by RMSI (Remaining Minimum System Information), higher layer signaling (for example, RRC (Radio Resource Control) signaling, broadcast information (master information block (MIB), system information blocks (SIBs), and so on), MAC (Medium Access Control) signaling), physical layer signaling (for example, downlink control information (DCI)), and other signals or combinations of these.

The combination is not limited to a combination of a carrier for which LBT is not configured and a carrier for which LBT is configured, a combination of a PCell (primary cell) and an SCell (secondary cell), and a combination of an MCG (master cell group) and an SCG (secondary cell group). For example, the present invention can also be applied to a case where UE establishes a connection through DC of a licensed carrier and an unlicensed carrier or in a stand-alone (SA) manner to an unlicensed carrier, a case where all of a PCell and an SCell(s) are carriers for which LBT is configured, and the like. In other words, an unlicensed carrier may be used for DC with a licensed carrier or for SA.

### <First Aspect>

By extending current PRACH structures in NR, broadbandization of an RA preamble may be achieved.

Configuration information for PRACH structures (for example, a table indicating PRACH structures) may be different from certain configuration information (for example, a table indicating current NR-PRACH structures) to be used for at least one of random access in a case of not supporting communication in an unlicensed carrier (NR-U) and random access in a licensed carrier.

For example, a UE that supports NR-U may determine a PRACH structure (transmit a RA preamble) by using at least one of tables 1 to 4 below.

### (Table 1)

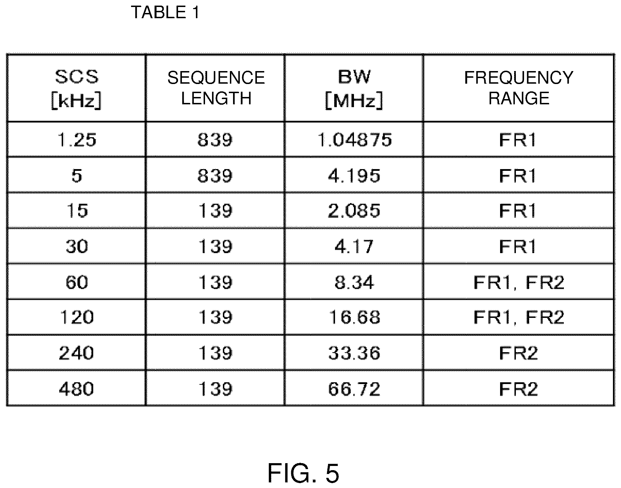

FIG. 5 is a diagram to show an example of table 1.

Each entry in table 1 may include at least one of SCS, sequence length of preamble sequence, bandwidth, and frequency range. The current PRACH structures in NR supports SCS of 60 kHz or 120 kHz only in FR2 of a short sequence. In contrast to this, table 1 supports SCS of 60 kHz or 120 kHz in FR1 of a short sequence in addition to the current PRACH structures in NR.

By using SCS of 120 kHz, short sequence, and FR1, the bandwidth of a RA preamble results in being 16.68 MHz to be hence able to satisfy the regulations of OCB.

According to table 1, it is possible to minimize a change from the current NR-PRACH structures while achieving broadbandization of a RA preamble in FR1. It is also possible to minimize complication in apparatus structure.

### (Table 2)

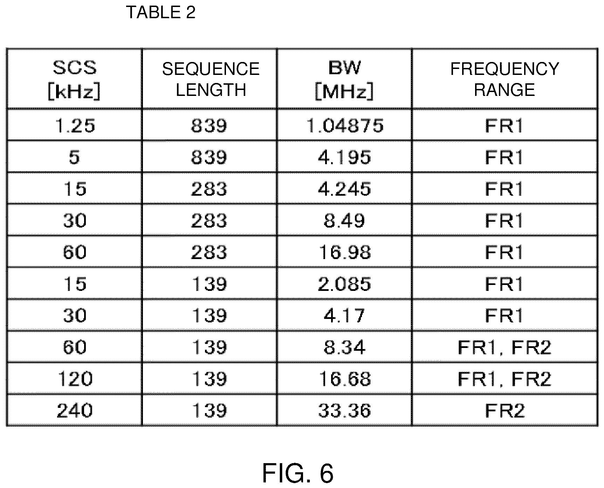

FIG. 6 is a diagram to show an example of table 2.

Each entry in table 2 may include at least one of SCS, sequence length, bandwidth, and frequency range. Table 2 supports a new sequence length in addition to the PRACH structures in table 1. The new sequence length may be longer than the short sequence and shorter than the long sequence. The new sequence length may be, for example, a sequence length (prime number) of a Zadoff-Chu sequence and may be, for example, 283.

By using SCS of 60 kHz, a sequence length of 283, and FR1, the bandwidth of a RA preamble results in being 16.98 MHz to be hence able to satisfy the regulations of OCB.

According to table 2, it is possible, by extending a sequence length to support, that a continuous discrete RA preamble of 60 kHz satisfies the regulations of OCB. The apparatus structure is complicated in comparison to a case using table 1.

### (Table 3)

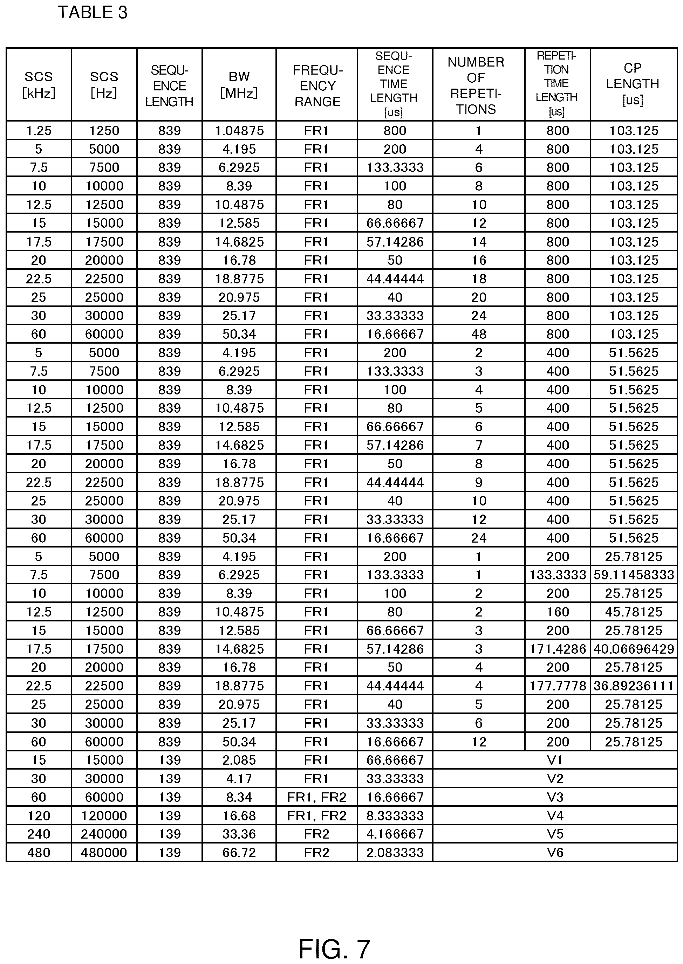

FIG. 7 is a diagram to show an example of table 3.

Each entry in table 3 may include at least one of SCS, sequence length, bandwidth, frequency range, sequence time length (time length of a preamble sequence), the number of repetitions (the number of times of transmission repetitions of a preamble sequence), repetition time length (the total time length of a preamble sequence transmitted repeatedly), and CP length. The current PRACH structures in NR support SCS of 15 kHz ^{∗} 2ⁿ (n is an integer). In contrast to this, table 3 supports SCS of finer granularity other than SCS of 15 kHz ^{∗} 2ⁿ. Parameters in V1 to V6 in FIG. 7 may conform to NR-PRACH structures of a short sequence.

By using SCS of 20 kHz or 22.5 kHz, long sequence, and FR1, the bandwidth of a RA preamble results in being 16.78 MHz or 18.8775 MHz respectively to be hence able to satisfy the regulations of OCB.

By repeatedly using SCS of 25 kHz or higher, long sequence, and FR1, the bandwidth of a RA preamble can result in being 20 MHz or wider.

Moreover, by changing at least one of the number of repetitions and CP length according to SCS, the time length of a RA preamble (repetition time length + CP length) can be brought closer to a certain value. For example, by changing the number of repetitions according to SCS of 1.25 kHz to 60 kHz, the RA preamble time length can be maintained at the certain value. In a case that the sequence time length is not brought to the certain value, based on SCS and the number of repetitions, the RA preamble time length can be maintained at the certain value, based on the CP length.

According to table 3, granularity of SCS is finer than those in tables 1 and 2, which complicates the apparatus structure, but this allows flexible bandwidth configurations.

### (Table 4)

Table 4 may indicate a different sequence length at least in some entries having a sequence length of 839 in table 3 or may add entries having a different sequence length to table 3. The other sequence length may be 283. In these entries, by changing at least one of the number of repetitions and CP length, the RA preamble time lengths may be adjusted to the RA preamble time lengths of the entries having other sequence lengths in table 3 or 4.

According to table 4, granularity of sequence length is finer, which complicates the apparatus structure in comparison to tables 1 to 3, but this allows flexible bandwidth structures.

A UE that supports NR-U may determine a PRACH structure by using a table combining any ones of tables 1 to 4 above.

A table according to a first aspect and a table indicating the current NR-PRACH structures may be different in at least one of frequency range, sequence length, and SCS. The UE can transmit a RA preamble suitable for an unlicensed carrier, based on this table.

In the table according to the first aspect, at least one bandwidth corresponding to FR1 may be wider than 16 MHz (80% of 20 MHz). In other words, in a case that an unlicensed carrier is in FR1, the bandwidth of a RA preamble may be wider than 16 MHz. With this bandwidth, it is possible for a RA preamble to satisfy the regulations of OCB.

Separate tables may be provided according to a parameter of PRACH structures (for example, frequency range, sequence length, or SCS).

According to the first aspect, it is possible for a RA preamble in NR-U to satisfy the regulations of OCB. The UE can transmit a RA preamble having a band of 20 MHz or wider and can use a band of 20 MHz or higher.

### <Second Aspect>

A UE may perform signal processing on a PRACH structure obtained from a table in NR or the first aspect, to thereby achieve broadbandization of a RA preamble. For example, a UE that supports NR-U may generate a RA preamble by using at least one of signal processing 1 to signal processing 3 below.

### (Signal Processing 1)

The UE may map a preamble sequence to a frequency resource by using interlace (block-interleaved FDMA). For example, interlace may map a preamble sequence to a frequency resource having M contiguous RBs at an interval of a certain number N of [RBs (Resource Blocks)]. M may be 1. N may be any of 2, 4, 10, 20, and 40. In other words, the UE may map a preamble sequence to discontiguous frequency resources.

### (Signal Processing 2)

The UE may employ frequency hopping for a RA preamble. Frequency hopping causes the frequency of a RA preamble to hop every certain time. The number of hops in frequency hopping may be any of 2, 4, 10, 20, and 40. The frequency width to change per hop may be any of 2, 4, 10, 20, and 40 RBs. The frequency width may be determined based on at least one of the number of hops, sequence length, and preamble sequence time length.

### (Signal Processing 3)

The UE may transmit a dummy signal (specific signal) in a band other than that for a RA preamble to satisfy the regulations of OCB. The dummy signal may be similar to a RA preamble or may be different from a RA preamble in at least one of sequence, cyclic shift, transmission power per unit bandwidth (for example, RB or subcarrier). In other words, the UE may transmit a specific signal in a frequency band other than that for a random access preamble in a certain frequency band of an unlicensed carrier (channel having a bandwidth of 20 MHz).

According to the second aspect above, even when a PRACH structure not satisfying the regulations of OCB is defined in a specification, it is possible to transmit a RA preamble satisfying the regulations of OCB, through signal processing. The UE can transmit a RA preamble having a band of 20 MHz or wider and can use a band of 20 MHz or higher.

### (Radio Communication System)

Hereinafter, a structure of a radio communication system according to one embodiment of the present invention will be described. In this radio communication system, the radio communication method according to each embodiment of the present invention described above may be used alone or may be used in combination for communication.

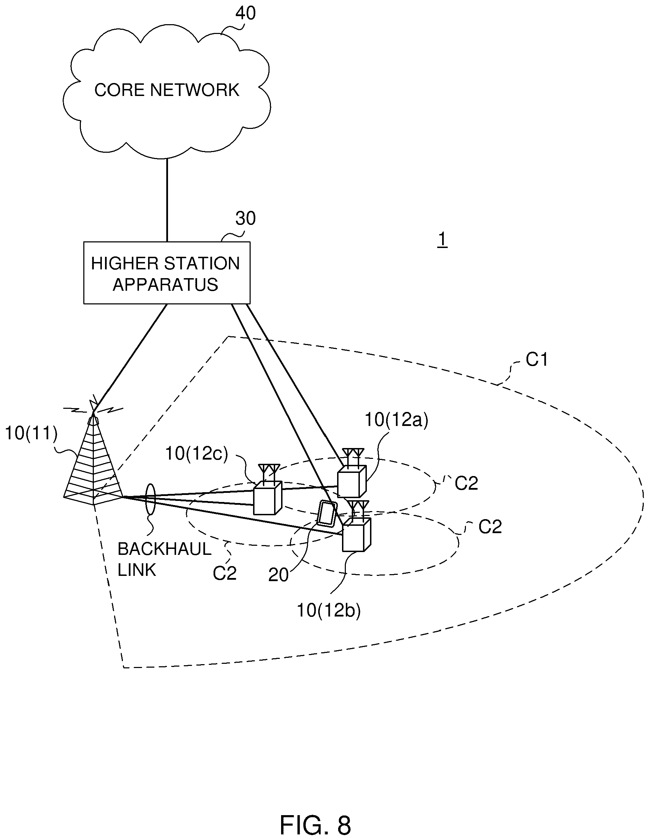

FIG. 8 is a diagram to show an example of a schematic structure of the radio communication system according to one embodiment of the present invention. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement of each cell and user terminal 20 is by no means limited to that shown in the diagram.

The user terminals 20 can connect with both the radio base station 11 and the radio base stations 12. It is assumed that the user terminals 20 use the macro cell C1 and the small cells C2 at the same time by CA or DC. The user terminals 20 may execute CA or DC by using a plurality of cells (CCs) (for example, up to five CCs or six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

A configuration of a wired connection (for example, means in compliance with the CPRI (Common Public Radio Interface) such as an optical fiber, an X2 interface, and so on) or a wireless connection may be established between the radio base station 11 and the radio base stations 12 (or between two radio base stations 12) .

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands constituted of one or continuous resource blocks per terminal and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels, and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and PUSCH scheduling information, and so on are communicated on the PDCCH. The number of OFDM symbols to use for the PDCCH is communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information, and so on are communicated on the PUSCH. In addition, radio quality information (CQI (Channel Quality Indicator)) of the downlink, transmission confirmation information, and so on are communicated on the PUCCH. Random access preambles for establishing connections with cells are communicated on the PRACH.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### (Radio Base Station)

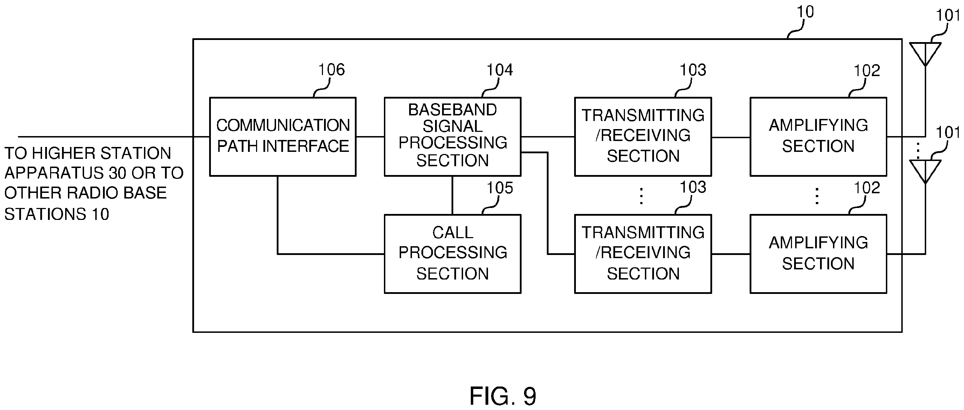

FIG. 9 is a diagram to show an example of an overall structure of the radio base station according to one embodiment of the present invention. A radio base station 10 includes a plurality of transmitting/receiving antennas 101, amplifying sections 102, transmitting/receiving sections 103, a baseband signal processing section 104, a call processing section 105 and a communication path interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits, or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing, and so on) for communication channels, manages the state of the radio base station 10, manages the radio resources, and so on.

The communication path interface 106 transmits and/or receives signals to and/or from the higher station apparatus 30 via a certain interface. The communication path interface 106 may transmit and/or receive signals (backhaul signaling) with other radio base stations 10 via an inter-base station interface (for example, an optical fiber in compliance with the CPRI (Common Public Radio Interface) and an X2 interface).

The transmitting/receiving sections 103 may receive random access preambles in carriers for which listening before transmission is employed.

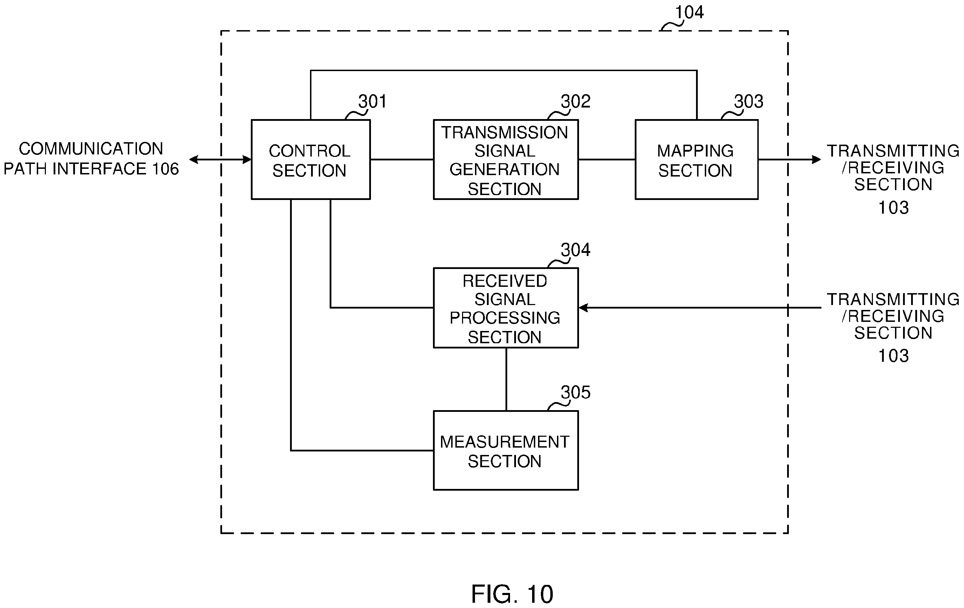

FIG. 10 is a diagram to show an example of a functional structure of the radio base station according to one embodiment of the present invention. Note that, the present example primarily shows functional blocks that pertain to characteristic parts of the present embodiment, and it is assumed that the radio base station 10 includes other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit, or control apparatus that can be described based on general understanding of the technical field to which the present invention pertains.

The control section 301, for example, controls the generation of signals by the transmission signal generation section 302, the mapping of signals by the mapping section 303, and so on. The control section 301 controls the signal receiving processes by the received signal processing section 304, the measurements of signals by the measurement section 305, and so on.

The control section 301 controls the scheduling (for example, resource assignment) of system information, a downlink data signal transmitted on the PDSCH, and a downlink control signal transmitted on the PDCCH and/or the EPDCCH. Based on the results of determining necessity or not of retransmission control to the uplink data signal, or the like, the control section 301 controls generation of a downlink control signal (for example, transmission confirmation information and the like), a downlink data signal, and so on. The control section 301 controls the scheduling of a synchronization signal (for example, PSS (Primary Synchronization Signal)/SSS (Secondary Synchronization Signal)), a downlink reference signal (for example, CRS, CSI-RS, DMRS), and so on.

The control section 301 controls the scheduling of an uplink data signal transmitted on the PUSCH, an uplink control signal transmitted on the PUCCH and/or the PUSCH (for example, transmission confirmation information), a random access preamble transmitted on the PRACH, an uplink reference signal, and so on.

The control section 301 may control transmission of a downlink signal in a carrier (for example, an unlicensed carrier) for which listening is carried out before downlink transmission, for the transmission signal generation section 302 and the mapping section 303, based on an LBT result obtained by the measurement section 305.

The control section 301 may control reception of the random access preamble, based on configuration information different from certain configuration information to be used for at least one of random access in a case of not supporting communication in the carrier and random access in a carrier for which listening before transmission is not employed.

The transmission signal generation section 302 generates downlink signals (downlink control signals, downlink data signals, downlink reference signals and so on) based on an indication from the control section 301 and outputs the downlink signals to the mapping section 303. The transmission signal generation section 302 can be constituted with a signal generator, a signal generation circuit, or signal generation apparatus that can be described based on general understanding of the technical field to which the present invention pertains.

For example, the transmission signal generation section 302 generates DL assignment to report assignment information of a downlink signal and UL grant to report assignment information of an uplink signal, based on an indication from the control section 301. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on an indication from the control section 301, and outputs these to the transmitting/receiving sections 103. The mapping section 303 can be constituted with a mapper, a mapping circuit, or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit, or signal processing apparatus that can be described based on general understanding of the technical field to which the present invention pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. Moreover, the received signal processing section 304 outputs the received signals and/or the signals after the receiving processes to the measurement section 305.

The measurement section 305 conducts measurements with respect to the received signals. The measurement section 305 can be constituted with a measurer, a measurement circuit, or measurement apparatus that can be described based on general understanding of the technical field to which the present invention pertains.

The measurement section 305 may carry out LBT in a carrier for which LBT is configured (for example, an unlicensed carrier), based on an indication from the control section 301, and output an LBT result (for example, a result of determination about whether a channel state is free or busy) to the control section 301.

The measurement section 305 may, for example, measure a received power (for example, RSRP (Reference Signal Received Power)) and a received quality (for example, RSRQ (Reference Signal Received Quality) or an SINR (Signal to Interference plus Noise Ratio)) of each received signal, uplink channel information (for example, CSI), and so on. The measurement results may be output to the control section 301.

### (User Terminal)

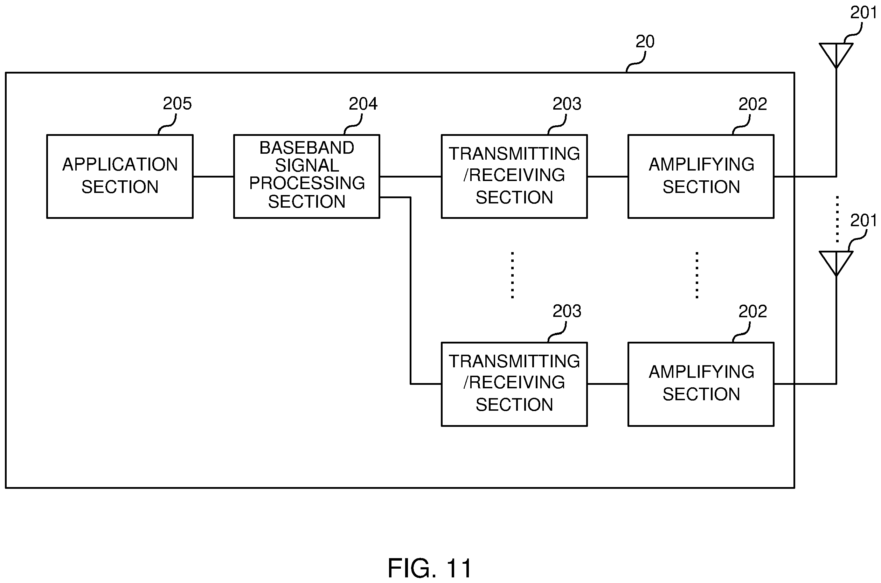

FIG. 11 is a diagram to show an example of an overall structure of a user terminal according to one embodiment of the present invention. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits, or transmitting/receiving apparatus that can be described based on general understanding of the technical field to which the present invention pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 may transmit random access preambles in carriers for which listening before transmission (for example, unlicensed carriers) is employed.

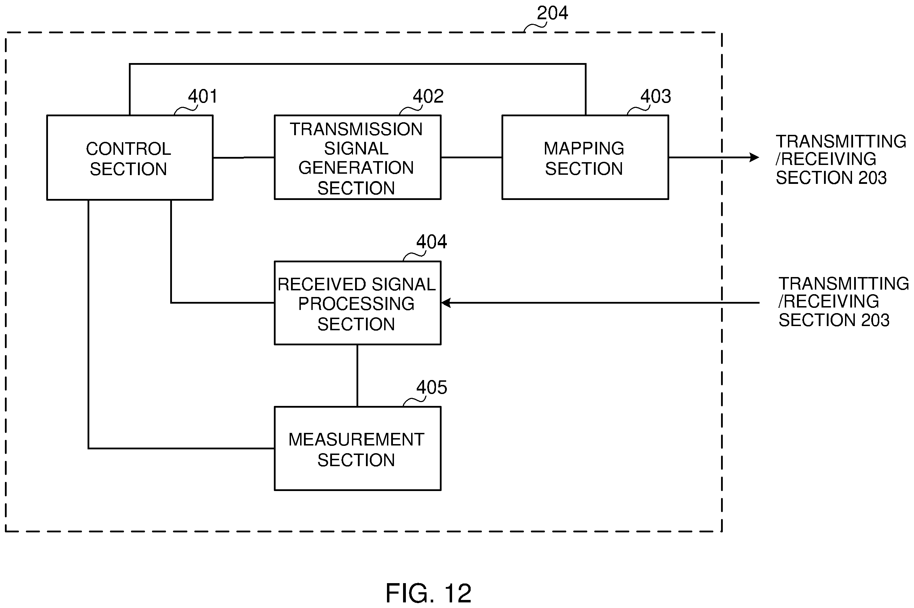

FIG. 12 is a diagram to show an example of a functional structure of a user terminal according to one embodiment of the present invention. Note that, the present example primarily shows functional blocks that pertain to characteristic parts of the present embodiment, and it is assumed that the user terminal 20 includes other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit, or control apparatus that can be described based on general understanding of the technical field to which the present invention pertains.

The control section 401, for example, controls generation of signals in the transmission signal generation section 402, the mapping of signals by the mapping section 403, and so on. The control section 401 controls the signal receiving processes by the received signal processing section 404, the measurements of signals by the measurement section 405, and so on.

The control section 401 acquires a downlink control signal (a signal transmitted on the PDCCH/EPDCCH) and a downlink data signal (a signal transmitted on the PDSCH) that are transmitted from the radio base station 10, from the received signal processing section 404. The control section 401 controls generation of an uplink control signal (for example, transmission confirmation information and the like) and/or an uplink data signal, based on such as the results of determining necessity or not of retransmission control to a downlink control signal and/or a downlink data signal.

The control section 401 may control transmission of an uplink signal in a carrier (for example, an unlicensed carrier) for which listening is carried out before uplink transmission, for the transmission signal generation section 402 and the mapping section 403, based on an LBT result obtained by the measurement section 405.

The control section 401 may control transmission of the random access preamble, based on configuration information different from certain configuration information to be used for at least one of random access in a case of not supporting communication in the carrier and random access in a carrier for which listening before transmission is not employed.

The configuration information and the certain configuration information may be different from each other in at least one of frequency range, preamble sequence length, and subcarrier spacing.

The control section 401 may control at least one of mapping a preamble sequence to discontiguous frequency resources, employing frequency hopping on the random access preamble, and transmitting a specific signal in a frequency band other than that of a random access preamble in a certain frequency band.

In a case that the carrier is of a frequency lower than 7 GHz, the bandwidth of the random access preamble may be wider than 16 MHz.

If the control section 401 acquires a variety of information reported by the radio base station 10 from the received signal processing section 404, the control section 401 may update parameters to use for control, based on the information.

The transmission signal generation section 402 generates uplink signals (uplink control signals, uplink data signals, uplink reference signals, and so on) based on an indication from the control section 401, and outputs the uplink signals to the mapping section 403. The transmission signal generation section 402 can be constituted with a signal generator, a signal generation circuit, or signal generation apparatus that can be described based on general understanding of the technical field to which the present invention pertains.

For example, the transmission signal generation section 402 generates an uplink control signal about transmission confirmation information, the channel state information (CSI), and so on, based on an indication from the control section 401. The transmission signal generation section 402 generates uplink data signals, based on an indication from the control section 401. For example, when a UL grant is included in a downlink control signal that is reported from the radio base station 10, the control section 401 instructs the transmission signal generation section 402 to generate the uplink data signal.

The mapping section 403 maps the uplink signals generated in the transmission signal generation section 402 to radio resources, based on an indication from the control section 401, and outputs the result to the transmitting/receiving sections 203. The mapping section 403 can be constituted with a mapper, a mapping circuit, or mapping apparatus that can be described based on general understanding of the technical field to which the present invention pertains.

The received signal processing section 404 performs receiving processes (for example, demapping, demodulation, decoding, and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit, or signal processing apparatus that can be described based on general understanding of the technical field to which the present invention pertains. The received signal processing section 404 can constitute the receiving section according to the present invention.

The received signal processing section 404 outputs the decoded information acquired through the receiving processes to the control section 401. The received signal processing section 404 outputs, for example, broadcast information, system information, RRC signaling, DCI, and so on, to the control section 401. Moreover, the received signal processing section 404 outputs the received signals and/or the signals after the receiving processes to the measurement section 405.

The measurement section 405 conducts measurements with respect to the received signals. For example, the measurement section 405 conducts measurements by using downlink reference signals transmitted from the radio base station 10. The measurement section 405 can be constituted with a measurer, a measurement circuit, or measurement apparatus that can be described based on general understanding of the technical field to which the present invention pertains.

The measurement section 405 performs LBT in a carrier for which LBT is configured based on an indication from the control section 401. The measurement section 405 may output LBT results (for example, results of determination about whether a channel state is free or busy) to the control section 401.

The measurement section 405 may measure, for example, a received power (for example, RSRP) and a received quality (for example, RSRQ and received SINR) of each received signal, downlink channel information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus.

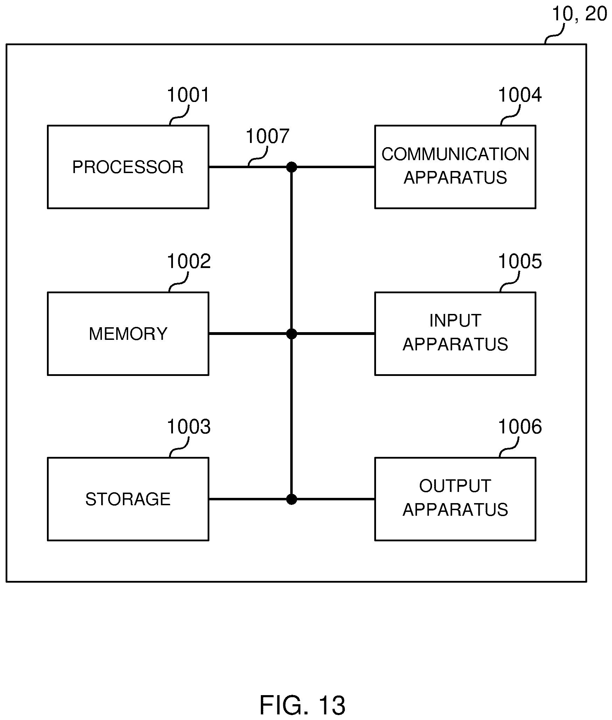

For example, a radio base station, a user terminal, and so on according to one embodiment of the present disclosure may function as a computer that executes the processes of the radio communication method of the present disclosure. FIG. 13 is a diagram to show an example of a hardware structure of the radio base station and the user terminal according to one embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disc), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, at least one of "channels" and "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "transmission time interval (TTI)," a plurality of consecutive subframes may be referred to as a "TTI" or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain.

Also, an RB may include one or a plurality of symbols in the time domain, and may be one slot, one mini-slot, one subframe, or one TTI in length. One TTI and one subframe each may be constituted of one or a plurality of resource blocks.

Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. Since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure are used interchangeably.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," a "bandwidth part (BWP)," and so on can be used interchangeably. The base station may be referred to as the terms such as a "macro cell," a small cell," a "femto cell," a "pico cell," and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as "transmitting apparatus," "receiving apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation.

Furthermore, the radio base station in the present disclosure may be interpreted as a user terminal. For example, each aspect/embodiment of the present disclosure may be applied to the structure that replaces a communication between a radio base station and a user terminal with a communication between a plurality of user terminals (for example, which may be referred to as "D2D (Device-to-Device)," "V2X (Vehicle-to-Everything)," and the like). In this case, the user terminals 20 may have the functions of the radio base stations 10 described above. The words "uplink," "downlink," and so on may be interpreted as the words corresponding to the terminal-to-terminal communication (for example, "side"). For example, an uplink channel, a downlink channel and so on may be interpreted as a side channel.

Likewise, a "user terminal" in the present disclosure may be interpreted as a "radio base station." In this case, the radio base stations 10 may have the functions of the user terminals 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to such as LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." The terms "separate," "be coupled" and so on may be interpreted similarly.

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a transmitting section that transmits a random access preamble in a carrier for which listening before transmission is employed; and
a control section that controls transmission of the random access preamble, based on configuration information different from certain configuration information to be used for at least one of random access in a case of not supporting communication in the carrier and random access in a carrier for which listening before transmission is not employed.

2. The user terminal according to claim 1, wherein the configuration information and the certain configuration information are different from each other in at least one of frequency range, preamble sequence length, and subcarrier spacing.

3. The user terminal according to claim 1 or 2, wherein
the control section controls at least one of mapping a preamble sequence to discontiguous frequency resources, employing frequency hopping for the random access preamble, and transmitting a specific signal in a frequency band other than a frequency band of the random access preamble in a certain frequency band.

4. The user terminal according to any one of claims 1 to 3, wherein,
in a case that the carrier is of a frequency lower than 7 GHz, a bandwidth of the random access preamble is wider than 16 MHz.

5. A radio base station comprising:
a receiving section that receives a random access preamble in a carrier for which listening before transmission is employed; and
a control section that controls reception of the random access preamble, based on configuration information different from certain configuration information to be used for at least one of random access in a case of not supporting communication in the carrier and random access in a carrier for which listening before transmission is not employed.
